# EUROPEAN PATENT APPLICATION

(11) **EP 4 459 344 A1**
(43) Date of publication of application: **06.11.2024**
(21) Application number: 24173904.4
(22) Date of filing: 02.05.2024
(51) Int. Cl.: G02B 6/44

(54) **OPTICAL FIBER CABLE WITH EMBEDDED STRENGTH MEMBERS**

(30) Priority: 04.05.2023 IN 202311031709
(71) Applicant: Sterlite Technologies Limited, Gurugram, Haryana 122102 (IN)
(72) Inventor: Singh, Sourabh, 122102 Gurugram, Haryana (IN); Shukla, Vikash, 122102 Gurugram, Haryana (IN)
(74) Representative: Petraz, Gilberto Luigi

(57) **Abstract**

The present disclosure relates to an optical fiber cable (100) comprising one or more optical fibers (102), a sheath (104) surrounding the one or more optical fibers (102). Particularly, a plurality of multi-filament strength members (106) are embedded in the sheath (104). Moreover, from the plurality of multi-filament strength members (106) at least one multi-filament strength member (106a) is made up of a first multi-filament material which is different from the second multi-filament material of the other multi-filament strength members (106b).

## Description

### TECHNICAL FIELD

Embodiments of the present disclosure relate to the field of telecommunication fiber, and more particularly, relates to an optical fiber cable with embedded strength members.
This application claims the benefit of Indian Application No. "202311031709" titled "OPTICAL FIBER CABLE WITH EMBEDDED STRENGTH MEMBERS" filed by the applicant on 04th May 2023, which is incorporated herein by reference in its entirety.

### BACKGROUND ART

Telecommunications networks include access networks where end-user subscribers connect to service providers. With the advancement of science and technology, various modern technologies are being employed for communication purposes. Over the last few years, there has been a rapid rise in the development and usage of networking technology. This is particularly the case in the field of optical fiber cables and their applications.

Being a critical component of a modern communication network across the globe, optical fiber cables are widely used for communication to meet the increasing demands. The optical fiber cables consist of a number of optical fibers. An exemplary commercially available optical fiber cable that can find use in local distribution plant comprises a central (steel or polymer) strength member surrounded by a jacket, a multiplicity of fiber-containing loose tubes stranded around the jacket.

The optical fiber cables may be provided with one or more strength members to provide mechanical strength for handling and pulling the optical fiber cable and stiffness for blowing and to bear the load during operations.

Conventional optical fiber cables have strength members embedded either at the center of the optical fiber cable, or in the sheath of the optical fiber cable. The strength members are either made up of Aramid Reinforced Plastic (ARP) or Fiberglass Reinforced Plastic (FRP).

Japanese Patent application "JP2010128169A" titled "Optical fiber cable" discloses strength members made of mono-filament such as Polyethylene Terephthalate (PET) or Polybutylene terephthalate (PBT) having young's modulus in a range of 8 to 30 Giga-Pascals (GPa) and multi-filaments either made up of FRP or ARP inside the optical fiber cables.

US Patent application "US7706640B2" titled "Telecommunication optical cable for gas pipeline applications having built-in leakage detecting device" discloses strength members are embedded with eitherARP or FRP only. Further two tubes containing fibers are embedded in a sheath of the optical fiber cable for gas leak detection.

WIPO Patent application "WO2022153970A1" titled "Optical fiber cable and connector-equipped cable" discloses strength members made up of either of, ARP, FRP or liquid crystal polymer (LCP).

Prior arts, exemplified by documents such as JP2010128169A, US7706640B2, and WO2022153970A1, exhibits distinct limitations. The utilization of Fiber Reinforced Polymer (FRP) strength members imparts undesired rigidity to cables, while Aramid Reinforced Polymer (ARP) counterparts lead to heightened expenses. The existing state of the art inadequately attains an optimal equilibrium between flexibility and cost-effectiveness.

Conventional cables featuring Fiber Reinforced Polymers (FRPs) as exclusive strength elements exhibit undesired rigidity, whereas those incorporating Aramid Reinforced Polymers (ARPs) entail elevated costs.

However, there are a number of drawbacks in the above stated prior arts such as strength members made up of FRP make the optical fiber cable rigid and less flexible whereas strength members made up of ARP adds up to the expenses of the optical fiber cable.

Accordingly, to overcome the disadvantages of the prior art, there is an urgent need for a technical solution that pertains to mitigating deficiencies inherent in traditional optical fiber cable designs, specifically concerning the selection of strength members integrated into the cable sheath to overcome the above-stated limitations in the prior arts. Thus, the present disclosure provides an optical fiber cable having embedded strength members to overcome these constraints by introducing a novel optical fiber cable configuration that seamlessly combines flexibility with cost-effectiveness, thereby optimizing overall performance.

### SUMMARY OF THE DISCLOSURE

Embodiments of the present disclosure relates to an optical fiber cable comprising one or more optical fibers, a sheath surrounding the optical fibers and a plurality of multi-filament strength members embedded in the sheath. In particular, at least one multi-filament strength member of the plurality of multi-filament strength members is made up of a first multi-filament material which is totally different from second multi-filament material of the other multi-filament strength members. Moreover, the first multi-filament material is aramid yarn and the second multi-filament material is glass roving yarn.

Further, the at least one multi-filament strength member is made up of the first material is at least 50% of the plurality of multi-filament strength members.

According to the first aspect of the present disclosure, the multi-filament strength members may be in a range of 2 to 14.

According to the second aspect of the present disclosure, each of the multi-filament strength members has a diameter that is in a range of 0.5 millimetres (mm) to 1.5 mm.

According to the third aspect of the present disclosure, each of the multi-filament strength members may be in any shape but not limited to a circular shape, a rectangular shape, an oval shape, or a square shape.

According to the fourth aspect of the present disclosure, each multi-filament strength member of the at least first multi-filament strength member has a first diameter (D1). And each multi-filament strength member of the second multi-filament strength member has a second diameter (D2). Further, the first diameter (D1) is less than or equal to the second diameter (D2).

According to the fifth aspect of the present disclosure, each multi filament of the first multi-filament strength member has a first value of a young's modulus that is greater than 90 Giga-Pascals (GPa). And each multi-filament strength member of the second multi-filament strength member (106b) has a second value of the young's modulus that is less than 90 GPa.

According to the sixth aspect of the present disclosure, each multi filament of the first multi-filament strength members has a first elongation value at a break less than 2 percent. And each multi-filament strength member of the second multi-filament strength member has a second elongation value at a break greater than 2 percent.

According to the seventh aspect of the present disclosure, the bending stiffness of the optical fiber cable is less than 1.3 times the bending stiffness of an optical fiber cable having strength members similar to the first type of strength members only.

The foregoing objectives of the present disclosure are attained by providing an optical fiber cable having embedded strength members.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fiber cable having a plurality of multi-filament strength members fully embedded in a sheath in accordance with one embodiment of the present disclosure;
Fig. 2 is a pictorial snapshot illustrating the optical fiber cable having the plurality of multi-filament strength members partially embedded in the sheath in accordance with another embodiment of the present disclosure;
Fig. 3 is a pictorial snapshot illustrating the optical fiber cable having the plurality of multi-filament strength members in accordance with an embodiment of the present disclosure;
Fig.4 is a snapshot illustrating sheath of the optical fiber cable having the plurality of multi-filament strength members in accordance with an embodiment of the present disclosure;

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Term "sheath" as used herein refers to an outermost layer or an outermost jacket of the optical fiber cable that holds and protects the contents of the optical fiber cable.

Term "multi-filament strength member" as used herein refers to a strength member made up of multiple filaments or yarns that provides strength to the optical fiber cable.

Term "multi-filament material" as used herein refers to a yarn material used to make the multi-filament strength member.

Term "elongation at a break" as used herein refers to a value of increase in a length of the multi-filament strength member (*i.e*, elongation) before breaking of the multi-filament strength member.

Term "bending stiffness" as used herein refers to a resistance value of the multi-filament strength member before a deformation in a shape of the multi-filament strength member.

Term "ribbon stack" as used herein refers to a type of optical fiber ribbon bundle formed in the form of a stack of optical fiber ribbons.

Term "ribbon bundle" as used herein refers to a bundle of optical fiber ribbons.

Term "tight-buffered optical fiber" as used herein refers to a thermoplastic layer that may surround an optical fiber and in contact with a single optical fiber such that an inner diameter of the thermoplastic layer is substantially equal to an outer diameter of the optical fiber.

Term "intelligently bonded fiber (IBR)" as used herein refers to an intermittently bonded ribbon consisting of fibers that are bonded (in a planned manner) using matrix material, that makes the IBR capable of being rolled up in the form of bundles.

Term "single core fiber" as used herein refers to an optical fiber having only one core.

Term "multi-core fiber" as used herein refers to an optical fiber having more than one core.

Term "multi-mode fiber" as used herein refers to a type of optical fiber that enables multiple light modes to be propagated inside the optical fiber and limits the maximum length of a transmission link by way of model dispersion.

Term "single mode fiber" as used herein refers to a type of optical fiber designed to carry only a single light mode or ray of light.

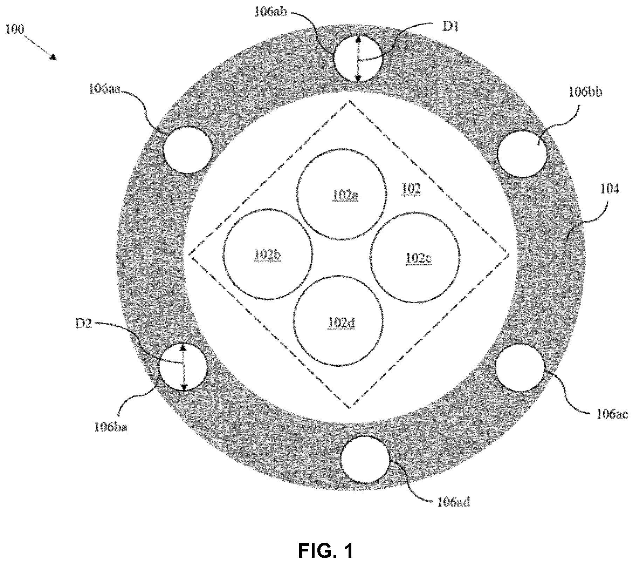

Fig. 1 is a pictorial snapshot illustrating an optical fiber cable having a plurality of multi-filament strength members fully embedded in a sheath in accordance with one embodiment of the present disclosure. In particular, the optical fiber cable 100 comprises a plurality of multi-filament strength members 106 fully embedded or partially embedded in a sheath 104 in accordance with various aspects of the disclosure.

The optical fiber cable 100 may have one or more optical fibers 102 and the sheath 104 that may surround the one or more optical fibers 102. In particular, the one or more optical fibers 102 may be capable of transferring information in the form of optical signals *(i.e.,* using light sources).

In particular, the optical fiber cable 100 may have first through fourth optical fibers of the one or more optical fibers 102 shown as 102a-102d, respectively. In alternative embodiments of the present disclosure, the one or more optical fibers 102 may have any number of optical fibers, without deviating from the scope of the present disclosure. In such a scenario, each optical fiber may be structurally and functionally similar to the first through fourth optical fibers 102 as described herein.

In accordance with an embodiment of the present disclosure, the one or more optical fibers 102 may be selected from but not limited to, a loose fiber, a ribbon stack, a ribbon bundle, an intelligently bundled ribbon (IBR) bundles, optical fibers in loose tubes, optical fibers in micromodules, tight-buffered optical fibers, and the like.

Further, in different embodiments of the present disclosure, the one or more fibers 102 may be selected from one of a single mode fiber and a multimode fiber.

Furthermore, in various embodiments of the present disclosure, the one or more fibers 102 may be selected from one of, a single-core fiber, and a multi-core fiber. In some other aspects of the present disclosure, the one or more fibers 102 may have one or more properties possessed by at least one of the above mentioned types of optical fibers.

The sheath 104 may be the outermost layer of the optical fiber cable 100 that surrounds the one or more optical fibers 102. In particular, the sheath 104 may protect the optical fiber cable 100 from breaking and/or abrasion. Moreover, the sheath 104 may have the plurality of multi-filament strength members 106 fully embedded in the sheath 104. Further, each multi-filament strength member of the plurality of multi-filament strength members 106 may have a diameter in a range of 0.5 millimetres (mm) - 1.5mm. Alternatively, the diameter range may vary.

In some aspects of the present disclosure, each multi-filament strength member of the plurality of multi-filament strength members 106 may have a shape that may be selected from one of, a circular shape, a rectangular shape, an oval shape, and a square shape. Aspects of the present disclosure are intended to include and/or otherwise cover any shape for each multi-filament strength member of the plurality of multi-filament strength members 106, known to a person of ordinary skill in the art, without deviating from the scope of the present disclosure.

In accordance of the present disclosure, the plurality of multi-filament strength members 106 fully embedded in the sheath 104 have at least one multi-filament strength member 106a (hereinafter interchangeably referred to and designated as "first set of multi-filament strength members 106a") of the plurality of multi-filament strength members 106 made up of a first multi-filament material. Moreover, the plurality of multi-filament strength members 106 embedded in the sheath 104 may have other multi-filament strength members 106b (hereinafter interchangeably referred to and designated as "second set of multi-filament strength members 106b") made up of a second multi-filament material.

In accordance with an embodiment of the present disclosure, the first multi-filament material may be different from the second multi-filament material. Particularly, the first multi-filament material may be aramid yarn *(i.e.,* a type of Aramid Reinforced Plastic (ARP) strength member) and the second multi-filament material may be glass roving yarn *(i.e.,* a type of Fiberglass Reinforced Plastic (FRP) strength member). Aspects of the present disclosure are intended to include and/or otherwise cover any type of filament material as the first multi-filament material and second multi-filament material including known, related, and later developed materials, and thus must not be considered as a limitation to the present disclosure.

In some aspects of the present disclosure, each multi-filament strength member of the first set of multi-filament strength members 106a may have a first diameter (D1) and each multi-filament strength member of the second set of multi-filament strength members 106b may have a second diameter (D2). In particular, the first diameter (D1) may be less than or equal to the second diameter (D2). Moreover, the first multi-filament material may have higher tensile strength than the second multi-filament material, thus the first set of multi-filament strength members 106a with a smaller diameter can provide a tensile strength equivalent to a tensile strength of the second set of multi-filament strength members 106b with a large diameter.

In accordance with an embodiment of the present disclosure, the first set of multi-filament strength members 106a may have a first value of a young's modulus that may be greater than 90 Giga-Pascals (GPa) and the second set of multi-filament strength members 106b may have a second value of the young's modulus that may be less than 90 GPa.

In accordance with an embodiment of the present disclosure, the first set of multi-filament strength members 106a may have a first elongation value at a break that may be less than 2 percent and the second set of multi-filament strength members 106b may have a second elongation value at the break that be greater than 2 percent.

The bending stiffness of the optical fiber cable 100 may be less than 1.3 times the bending stiffness of an optical fiber cable having one or more strength members similar to a strength member of the first set of multi-filament strength members 106a. Further, each strength member of the first set of multi-filament strength members 106a provides better bending capability to the optical fiber cable 100.

In accordance with an embodiment of the present disclosure, the plurality of multi-filament strength members 106 is in a range of 2 to 14. The first set of multi-filament strength members 106a may be at-least half (*i.e.* 50 percent) of the multi-filament strength members 106 to provide sufficient flexibility to the optical fiber cable 100 and ease of handling.

In accordance with an embodiment of the present disclosure, the plurality of multi-filament strength members 106 may be six. In particular, the first set of multi-filament strength members 106a may have first through fourth multi-filament strength members shown as 106aa-106ad, respectively. And, the second set of multi-filament strength members 106a may have fifth and sixth multi-filament strength members shown as 106ba and 106bb, respectively. In different embodiments of the present disclosure, it will be apparent to a person skilled in the art that strength members in the first set and the second set of multi-filament strength members may vary.

In alternative embodiments, the first and second sets of multi-filament strength members 106 may have any number of strength members such that the combined count of plurality of multi-filament strength members 106 is between 2 and 14, without deviating from the scope of the present disclosure. Each multi-filament strength member of the first set of multi-filament strength members 106a may be structurally and functionally similar to the first through fourth multi-filament strength members 106aa-106ad. Further, each multi-filament strength member of the second set of multi-filament strength members 106b may be structurally and functionally similar to the fifth and sixth multi-filament strength members 106ba-106bb.

In an alternative embodiment of the present disclosure, the shape, size and/or dimensions of each multi-filament strength member of the plurality of multi-filament strength members 106 *(i.e.,* the first through fourth multi-filament strength members shown as 106aa-106ad, and the fifth and sixth multi-filament strength members shown as 106ba and 106bb) may be same.

In an embodiment of the present disclosure, the plurality of multi-filament strength members 106 may be placed equidistant to one another in the sheath 104. In an alternative embodiment, the plurality of multi-filament strength members 106 may be strategically placed as per a desired requirement.

Further, the sheath 104 may have one or more layers (not shown) to fully embed the multi-filament strength members 106. Alternatively, the sheath 104 may have one or more layers (not shown) to partially embed the multi-filament strength members 106.

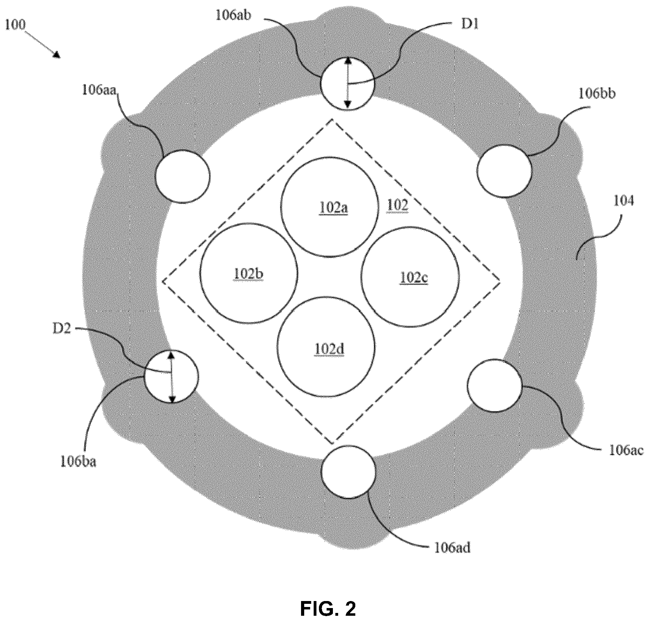

Fig. 2 is a pictorial snapshot illustrating the optical fiber cable having the plurality of multi-filament strength members partially embedded in the sheath in accordance with another embodiment of the present disclosure. The optical fiber cable 100 may have one or more optical fibers 102 and the sheath 104 surrounding the one or more optical fibers 102. The one or more optical fibers 102 has but not limited to four optical fibers *(i.e.,* the first through fourth optical fibers 102a-102d), it will be apparent to a person skilled in the art that the scope of the present disclosure is not limited to it. Further, each optical fiber may be structurally and functionally similar to the first through fourth optical fibers 102.

In accordance with an embodiment of the present disclosure, the one or more optical fibers 102 may be selected from but not limited to a loose fiber, a ribbon stack, a ribbon bundle, an intelligently bundled ribbon (IBR) bundles, optical fibers in loose tubes, optical fibers in micromodules, tight-buffered optical fibers, and the like. Further, the one or more fibers 102 may further be selected from one of a single mode fiber and a multimode fiber. Furthermore, the one or more fibers 102 may be selected from one of, a single-core fiber, and a multi-core fiber. In some other aspects of the present disclosure, the one or more fibers 102 may have one or more properties possessed by at least one of the above mentioned types of optical fibers.

In accordance with an embodiment of the present disclosure, the sheath 104 may be the outermost layer of the optical fiber cable 100 surrounding the one or more optical fibers 102 protecting the optical fiber cable 100 from breaking and/or abrasion. Particularly, the sheath 104 may have the plurality of multi-filament strength members 106 partially embedded in the sheath 104. Each multi-filament strength member of the plurality of multi-filament strength members 106 may have the diameter in the range of 0.5 millimetres (mm) - 1.5mm. Moreover, each multi-filament strength member of the plurality of multi-filament strength members 106 may have the shape that may be selected from but not limited to, a circular shape, a rectangular shape, an oval shape, and a square shape.

In accordance with an embodiment of the present disclosure, the plurality of multi-filament strength members 106 partially embedded in the sheath 104 may have at least one multi-filament strength member 106a *(i.e.,* the first set of multi-filament strength members 106a) made up of the first multi-filament material. Further, the plurality of multi-filament strength members 106 embedded in the sheath 104 may have other multi-filament strength members 106b (*i.e*., the second set of multi-filament strength members 106b) of the plurality of multi-filament strength members 106 made up of the second multi-filament material. The first multi-filament material may be different from the second multi-filament material.

In accordance with an embodiment of the present disclosure, the first multi-filament material may be aramid yarn (*i.e*., a type of Aramid Reinforced Plastic (ARP) strength member) and the second multi-filament material may be glass roving yarn (*i.e.*, a type of Fiberglass Reinforced Plastic (FRP) strength member).

Each multi-filament strength member of the first set of multi-filament strength members 106a may have the first diameter (D1) and the second set of multi-filament strength members 106b may have the second diameter (D2). The first diameter (D1) may be less than or equal to the second diameter (D2). Further, the first multi-filament material may have higher tensile strength than the second multi-filament material. Furthermore, the first set of multi-filament strength members 106a with the smaller diameter can provide the tensile strength equivalent to the tensile strength of the second set of multi-filament strength members 106b with the large diameter.

In accordance with an embodiment of the present disclosure, the first set of multi-filament strength members 106a may have the first value of the young's modulus that may be greater than 90 Giga-Pascals (GPa). And, the second set of multi-filament strength members 106b may have the second value of the young's modulus that may be less than 90 GPa.

In accordance with an embodiment of the present disclosure, the first set of multi-filament strength members 106a may have the first elongation value at a break less than 2 percent. The second set of multi-filament strength members 106b may have the second elongation value at the break greater than 2 percent.

In some aspects of the present disclosure, the bending stiffness of the optical fiber cable 100 may be less than 1.3 times of the bending stiffness of the optical fiber cable that has one or more strength members that are similar to the strength member of the first set of multi-filament strength members 106a.

In accordance with an embodiment of the present disclosure, the plurality of multi-filament strength members 106 may be in the range of 2 to 14. The first set of multi-filament strength members 106a may be at-least half (*i.e50* percent) of the plurality of multi-filament strength members 106 providing sufficient flexibility to the optical fiber cable 100 and ease of handling.

In an exemplary aspect of the present disclosure the plurality of multi-filament strength members 106 may preferably be six. The first set of multi-filament strength members 106a may have first through fourth multi-filament strength members shown as 106aa-106ad, respectively. The second set of multi-filament strength members 106a may have fifth and sixth multi-filament strength members shown as 106ba and 106bb, respectively.

In various other aspects, the first and second sets of multi-filament strength members 106 may have any number of strength members such that the combined count of plurality of multi-filament strength members 106 *(i.e.,* the first set of multi-filament strength members 106a and the second set of of multi-filament strength members 106a) is between 2 and 14, without deviating from the scope of the present disclosure. In such a scenario, each multi-filament strength member of the first set of multi-filament strength members 106a may be structurally and functionally similar to the first through fourth multi-filament strength members 106aa-106ad, and each multi-filament strength member of the second set of multi-filament strength members 106b may be structurally and functionally similar to the fifth and sixth multi-filament strength members 106ba-106bb as described herein.

In accordance with an embodiment of the present disclosure, the shape, size and/or dimensions of each multi-filament strength member of the plurality of multi-filament strength members 106 (*i.e*., the first through fourth multi-filament strength members shown as 106aa-106ad, and the fifth and sixth multi-filament strength members shown as 106ba and 106bb) may be same. In alternative embodiments the shape, size and/or dimensions of each multi-filament strength member of the plurality of multi-filament strength members 106 may be different.

In some aspects of the present disclosure, the plurality of multi-filament strength members 106 may be placed equidistant to one another in the sheath 104. Alternatively, the plurality of multi-filament strength members 106 may be strategically placed as per a desired requirement.

In accordance with an embodiment of the present disclosure, the sheath 104 may have one or more layers (not shown) to partially embed the multi-filament strength members 106.

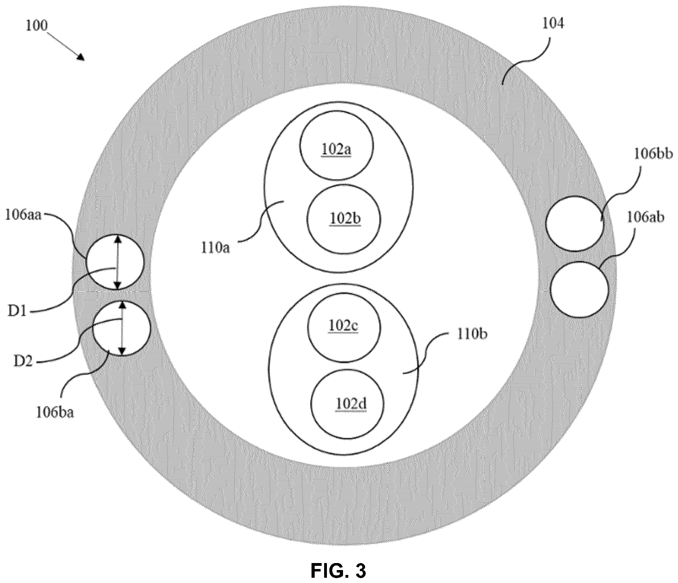

Fig. 3 is a pictorial snapshot illustrating the optical fiber cable having the plurality of multi-filament strength members in accordance with an embodiment of the present disclosure. The optical fiber cable 100 may have the plurality of multi-filament strength members 106, one or more optical fibers 102 in the form of one or more fiber bundles 110, and the sheath 104 surrounding the one fiber bundle 110 having the one or more optical fibers 102. Specifically, the one or more fiber bundles 110 may have a first and a second fiber bundle of the one or more fiber bundles 102 shown as 110a and 110b. The one or more fiber bundles 110 has two fiber bundles (*i*.*e*., the first and second fiber bundles 110a and 110b, respectively), it will be apparent to a person skilled in the art that the scope of the present disclosure is not limited to it. In various other aspects, the one or more fiber bundles 110 may have any number of fiber bundles and each fiber bundle may be structurally and functionally similar to the first and second fiber bundles 102 as described herein.

The first fiber bundle 110a may have the first and the second optical fibers of the one or more optical fibers 102 shown as 102a and 102b, and the second fiber bundle 110b may have the third and the fourth optical fibers of the one or more optical fibers 102 shown as 102c and 102d. In particular, the first fiber bundle 110a has two optical fibers (*i*.*e*., the first and second optical fibers 102a and 102b, respectively), and the second fiber bundle 110b has two optical fibers (*i*.*e*., the third and fourth optical fibers 102c and 102d, respectively) it will be apparent to a person skilled in the art that the scope of the present disclosure is not limited to it. Further, each optical fiber of the first fiber bundle 110a may be structurally and functionally similar to the first and second optical fibers 102a and 102b, and each optical fiber of the second fiber bundle 110b may be structurally and functionally similar to the third and fourth optical fibers 102c and 102d as described herein.

In accordance with an embodiment of the present disclosure, the one or more optical fibers 102 may be selected from one of, the loose fiber, the ribbon stack, the ribbon bundle, the intelligently bundled ribbon (IBR) bundles, the optical fibers in loose tubes, the optical fibers in micromodules, the tight-buffered optical fibers, and the like. Further, the one or more fibers 102 may further be selected from one of the single mode fiber and the multimode fiber. Furthermore, the one or more fibers 102 may be selected from one of the single-core fiber, and the multi-core fiber. In some other aspects of the present disclosure, the one or more fibers 102 may have one or more properties possessed by at least one of, the abovementioned types of optical fibers.

In accordance with an embodiment of the present disclosure, the sheath 104 may be the outermost layer of the optical fiber cable 100 surrounding the one or more optical fibers 102 and protecting the optical fiber cable 100 from breaking and/or abrasion. The sheath 104 may have the plurality of multi-filament strength members 106 that are embedded in the sheath 104. Further, each multi-filament strength member of the plurality of multi-filament strength members 106 may have the diameter in the range of 0.5 millimetres (mm) - 1.5mm. And, the shape of each multi-filament strength member of the plurality of multi-filament strength members 106 may be selected from but not limited to, the circular shape, the rectangular shape, the oval shape, and a square shape.

In accordance with an embodiment of the present disclosure, the plurality of multi-filament strength members 106 may have the first set of multi-filament strength members 106a, and the second set of multi-filament strength members 106b. The first set of multi-filament strength members 106a may be made up of the first multi-filament material such as but not limited to aramid yarn (*i.e*., the type of ARP strength member). The second set of multi-filament strength members 106b may be made up of the second multi-filament material that may be different from the first multi-filament material of the first set of multi-filament strength members 106a. The second multi-filament material may be but not limited to glass roving yarn (*i.e*., the type of FRP strength member).

Each multi-filament strength member of the first set of multi-filament strength members 106a may have the first diameter (D1) and each multi-filament strength member of the second set of multi-filament strength members 106b may have the second diameter (D2). The first diameter (D1) may be less than or equal to the second diameter (D2).

In some aspects of the present disclosure, the first set of multi-filament strength members 106a may have the first value of a young's modulus that may be greater than 90 Giga-Pascals (GPa). The second set of multi-filament strength members 106b may have the second value of the young's modulus that may be less than 90 GPa.

In some aspects of the present disclosure, the first set of multi-filament strength members 106a may have the first elongation value at the break less than 2 percent. The second set of multi-filament strength members 106b may have the second elongation value at the break greater than 2 percent. In some aspects of the present disclosure, the bending stiffness of the optical fiber cable 100 may be less than 1.3 times the bending stiffness of an optical fiber cable that has one or more strength members that are similar to a strength member of the first set of multi-filament strength members 106a.

In some aspects of the present disclosure, the plurality of multi-filament strength members 106 may be in a range of 2 to 14. In some aspects of the present disclosure, the the first set of multi-filament strength members 106a may be at-least half *(i.e.,* 50 percent) of the the plurality of multi-filament strength members 106, that may provide sufficient flexibility to the optical fiber cable 100 and may provide an ease of handling.

In an exemplary aspect of the present disclosure (as shown in FIG. 3), the plurality of multi-filament strength members 106 may preferably be four. The first set of multi-filament strength members 106a may have the first and second multi-filament strength members shown as 106aa and 106ab, respectively. The second set of multi-filament strength members 106a may have the third and the fourth multi-filament strength members shown as 106ba and 106bb, respectively.

Although Fig. 3 illustrates that the first set of multi-filament strength members 106a has two multi-filament strength members (*i.e*., the first and second multi-filament strength members 106aa and 106ab), and the second set of multi-filament strength members 106b has two multi-filament strength members (*i.e*., the fifth and sixth multi-filament strength members 106ba-106bb), it will be apparent to a person skilled in the art that the scope of the present disclosure is not limited to it.

In various other aspects, the first and second sets of multi-filament strength members 106 may have any number of strength members such that the combined count of plurality of multi-filament strength members 106 (*i.e.*, the first set of multi-filament strength members 106a and the second set of multi-filament strength members 106a) is between 2 and 14, without deviating from the scope of the present disclosure. In such a scenario, each multi-filament strength member of the first set of multi-filament strength members 106a may be structurally and functionally similar to the first and second multi-filament strength members 106aa and 106ab, and each multi-filament strength member of the second set of multi-filament strength members 106b may be structurally and functionally similar to the fifth and sixth multi-filament strength members 106ba-106bb as described herein.

The shape, size and/or dimensions of each multi-filament strength member of the plurality of multi-filament strength members 106 (*i.e.*, the first and the second multi-filament strength members shown as 106aa and 106ab, and the third and fourth multi-filament strength members shown as 106ba and 106bb) may be same.

In some aspects of the present disclosure, the plurality of multi-filament strength members 106 may be placed equidistant to one another in the sheath 104. Alternatively, the plurality of multi-filament strength members 106 may be strategically placed as per a desired requirement.

In some other aspects of the present disclosure, the sheath 104 may have the one or more layers (not shown) to fully or partially embed the multi-filament strength members 106.

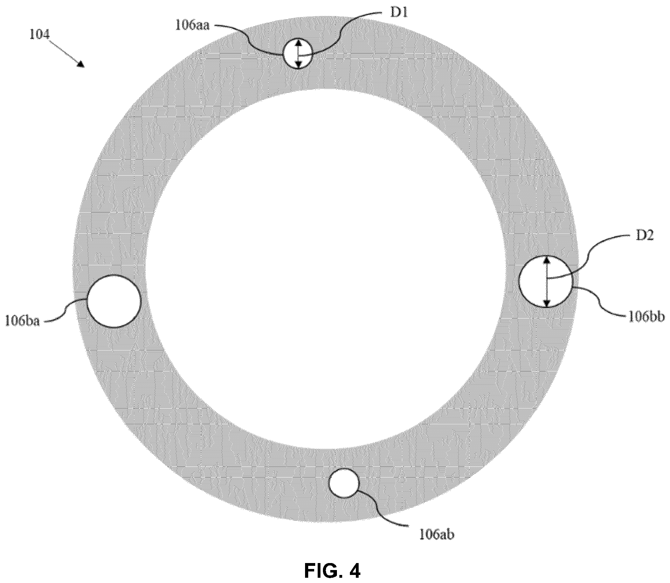

Fig.4 is a snapshot illustrating sheath of the optical fiber cable having the plurality of multi-filament strength members in accordance with an embodiment of the present disclosure. The sheath 104 may be the outermost layer of the optical fiber cable 100 and protects the optical fiber cable 100 from breaking and/or abrasion. The sheath 104 may have the plurality of multi-filament strength members 106 that are embedded in the sheath 104. Each multi-filament strength member of the plurality of multi-filament strength members 106 may have the diameter in the range of 0.5 millimetres (mm) - 1.5mm. And, the shape of each multi-filament strength member of the plurality of multi-filament strength members 106 may be selected from but not limited to, the circular shape, the rectangular shape, the oval shape, and a square shape.

The plurality of multi-filament strength members 106 may have the first set of multi-filament strength members 106a made up of the first multi-filament material and the second set of multi-filament strength members 106b made up of the second multi-filament material. The first set of multi-filament strength members 106a may be. The second multi-filament material may be different from the first multi-filament material of the first set of multi-filament strength members 106a. Preferably, the first multi-filament material may be but not limited to aramid yarn (*i.e*., the type of ARP strength member) and the second multi-filament material may be but not limited to glass roving yarn *(i.e.,* the type of FRP strength member).

In accordance with an embodiment of the present disclosure, the first set of multi-filament strength members 106a may have the first elongation value at the break less than 2 percent. The second set of multi-filament strength members 106b may have the second elongation value at the break greater than 2 percent. In some aspects of the present disclosure, a value of a bending stiffness of the optical fiber cable 100 may be less than 1.3 times of a value of a bending stiffness of an optical fiber cable that has one or more strength members that are similar to a strength member of the first set of multi-filament strength members 106a.

In some aspects of the present disclosure, the plurality of multi-filament strength members 106 may be in a range of 2 to 14. In some aspects of the present disclosure, the first set of multi-filament strength members 106a may be at-least half *(i.e.,* 50 percent) of the plurality of multi-filament strength members 106, that may provide sufficient flexibility to the optical fiber cable 100 and may provide an ease of handling.

In accordance with an embodiment of the present disclosure, the optical fiber cable 100 may further have one or more optical fibers 102 (as shown in FIG. 1 and FIG. 2). The one or more optical fibers 102 may be selected from one of, the loose fiber, the ribbon stack, the ribbon bundle, the intelligently bundled ribbon (IBR) bundles, the optical fibers in loose tubes, the optical fibers in micromodules, the tight-buffered optical fibers, and the like. The one or more fibers 102 may further be selected from one of the single mode fiber and the multimode fiber. Furthermore, the one or more fibers 102 may be selected from one of, the single-core fiber, and the multi-core fiber.

In an exemplary aspect of the present disclosure, the plurality of multi-filament strength members 106 may preferably be four. The first set of multi-filament strength members 106a may have the first and second multi-filament strength members shown as 106aa and 106ab, respectively. The second set of multi-filament strength members 106a may have the third and the fourth multi-filament strength members shown as 106ba and 106bb, respectively.

In various other aspects, the first and second sets of multi-filament strength members 106 may have any number of strength members such that the combined count of plurality of multi-filament strength members 106 (*i.e*., the first set of multi-filament strength members 106a and the second set of multi-filament strength members 106a) is between 2 and 14, without deviating from the scope of the present disclosure. Each multi-filament strength member of the first set of multi-filament strength members 106a may be structurally and functionally similar to the first and second multi-filament strength members 106aa and 106ab, and each multi-filament strength member of the second set of multi-filament strength members 106b may be structurally and functionally similar to the fifth and sixth multi-filament strength members 106ba-106bb as described herein.

In accordance with an embodiment of the present disclosure, the size and/or dimension of the first set of multi-filament strength members 106a may be less than the size and/or dimension of the second set of multi-filament strength members 106b. Alternatively, the plurality of multi-filament strength members 106 may be placed equidistant to one another in the sheath 104. In yet alternative embodiment, the plurality of multi-filament strength members 106 may be strategically placed as per a desired requirement.

In accordance with an embodiment of the present disclosure, the sheath 104 may have the one or more layers (not shown) to fully or partially embed the multi-filament strength members 106.

In accordance with an embodiment of the present disclosure, the optical fiber cable (100) characterizes one or more optical fibers (102), a sheath (104) that surrounds the one or more optical fibers (102); and a plurality of multi-filament strength members (106) embedded in the sheath (104). In particular, the at least one multi-filament strength member (106a) of the plurality of multi-filament strength members (106) that is made up of the first material that has a numerical count that is at-least 50% of a numerical count of the plurality of multi-filament strength members (106). Moreover, at least one multi-filament strength member (106a) of the plurality of multi-filament strength members (106) is made up of a first multi-filament material that is different from a second multi-filament material of the other multi-filament strength members (106b) of the plurality of multi-filament strength members (106). Further, the first multi-filament material is aramid yarn and the second multi-filament material is glass roving yarn.

Furthermore, each multi-filament strength member of the at least first multi-filament strength member (106a) has a first diameter (D1), and each multi-filament strength member of the second multi-filament strength member (106b) has a second diameter (D2). Particularly, such that the first diameter (D1) is less than or equal to the second diameter (D2).

In accordance with an embodiment of the present disclosure, the at least one multi-filament strength member (106a) has a first value of a young's modulus that is greater than 90 Giga-Pascals (GPa), and each multi-filament strength member of the other multi-filament strength members (106b) has a second value of the young's modulus that is less than 90 GPa.

In accordance with an embodiment of the present invention, the multi-filament strength members incorporating distinct manufacturing materials, including aramid yarn and glass roving yarn. The materials and diameters is instrumental in achieving an equilibrium between flexibility and cost-effectiveness in the optical fiber cable. Further, the multi-filament strength members, comprising two or more distinct materials, synergistically contribute to the optimized flexibility and cost-effectiveness of the optical fiber cable. Additionally, the variations in diameters, numerical counts, and Young's modulus values can ensure a harmonized mechanical performance, thereby presenting a robust and effective solution.

In real-world applications, the optical fiber cable of the invention finds utility in scenarios where striking a balance between flexibility and cost is imperative. Practical instances include installations demanding a customizable approach to strength members tailored for diverse operational and environmental conditions. Further, the disclosed optical fibers encompasses several optical fiber cable configurations featuring a plurality of embedded strength members, offering a versatile solution to industry challenges associated with flexibility and cost-effectiveness.

The disclosed invention presents a technique employing multi-filament strength members comprising diverse materials and successfully mitigates the rigidity commonly associated with Fiber Reinforced Polymer (FRP) and resolves the cost implications linked with Aramid Reinforced Polymer (ARP), thereby achieving an optimized balance between flexibility and cost-effectiveness in the design of optical fiber cables. In addition to flexibility and cost-effectiveness, the disclosed invention provides advantages stemming from reduced reliance on a singular material that allows for a customizable configuration by integrating strength members composed of diverse materials to attain desired characteristics. Further, the employment of multi-filament materials further enhances the mechanical properties of the cable, surpassing those achieved with single-filament-based strength members.

Advantageously, the optical fiber cable 100 is a less expensive optical fiber cable with optimized flexibility and strength by way of the plurality of multi-filament strength members 106 having the first set of multi-filament strength members 106a composed of the first multi-filament material *(i.e.,* the type of ARP strength member), and the second set of multi-filament strength members 106b composed of the second multi-filament material (*i.e*., the type of FRP strength member).

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100) **characterized in that**:
one or more optical fibers (102);
a sheath (104) that surrounds the one or more optical fibers (102); and
a plurality of multi-filament strength members (106) embedded in the sheath (104),
wherein at least one multi-filament strength member (106a) of the plurality of multi-filament strength members (106) is made up of a first multi-filament material that is different from a second multi-filament material of the other multi-filament strength members (106b) of the plurality of multi-filament strength members (106).

2. The optical fiber cable (100) of claim 1, where the plurality of multi-filament strength members (106) has a numerical count that is in a range of 2 to 14.

3. The optical fiber cable (100) of claim 1, where the first multi-filament material is aramid yarn and the second multi-filament material is glass roving yarn.

4. The optical fiber cable (100) of claim 1, where each multi-filament strength member of the plurality of multi-filament strength members (106) has a diameter that is in a range of 0.5 millimetres (mm) to 1.5 millimetres (mm).

5. The optical fiber cable (100) of claim 1, where each multi-filament strength member of the plurality of multi-filament strength members (106) has a shape that is selected from one of, a circular shape, a rectangular shape, an oval shape, a square shape.

6. The optical fiber cable (100) of claim 1, where the at least one multi-filament strength member (106a) of the plurality of multi-filament strength members (106) that is made up of the first material has a numerical count that is at-least 50% of a numerical count of the plurality of multi-filament strength members (106).

7. The optical fiber cable (100) of claim 1, where each multi-filament strength member of the at least first multi-filament strength member (106a) has a first diameter (D1), and each multi-filament strength member of the second multi-filament strength members (106b) has a second diameter (D2) such that the first diameter (D1) is less than or equal to the second diameter (D2).

8. The optical fiber cable (100) of claim 1, where the at least one multi-filament strength member (106a) has a first value of a young's modulus that is greater than 90 Giga-Pascals (GPa), and each multi-filament strength member of the other multi-filament strength members (106b) has a second value of the young's modulus that is less than 90 GPa.

9. The optical fiber cable (100) of claim 1, where the at least one multi-filament strength member (106a) has a first elongation value at a break that is less than 2 percent, and each multi-filament strength member of the other multi-filament strength members (106b) has a second elongation value at the break that is greater than 2 percent.

10. The optical fiber cable (100) of claim 1, where a bending stiffness of the optical fiber cable (100) is less than 1.3 times of a value of the bending stiffness of an optical fiber cable having strength members similar to the first type of strength members (106a) only.

11. An optical fiber cable (100) **characterized in that**:
one or more optical fibers (102);
a sheath (104) that surrounds the one or more optical fibers (102); and
a plurality of multi-filament strength members (106) embedded in the sheath (104), where the at least one multi-filament strength member (106a) of the plurality of multi-filament strength members (106) that is made up of the first material that has a numerical count that is at-least 50% of a numerical count of the plurality of multi-filament strength members (106).

12. The optical fiber cable (100) of claim 11, where at least one multi-filament strength member (106a) of the plurality of multi-filament strength members (106) is made up of a first multi-filament material that is different from a second multi-filament material of the other multi-filament strength members (106b) of the plurality of multi-filament strength members (106).

13. The optical fiber cable (100) of claim 11, where the first multi-filament material is aramid yarn and the second multi-filament material is glass roving yarn.

14. The optical fiber cable (100) of claim 11, where each multi-filament strength member of the at least first multi-filament strength member (106a) has a first diameter (D1), and each multi-filament strength member of the second multi-filament strength members (106b) has a second diameter (D2) such that the first diameter (D1) is less than or equal to the second diameter (D2).

15. The optical fiber cable (100) of claim 11, where the at least one multi-filament strength member (106a) has a first value of a young's modulus that is greater than 90 Giga-Pascals (GPa), and each multi-filament strength member of the other multi-filament strength members (106b) has a second value of the young's modulus that is less than 90 GPa.
